# EUROPEAN PATENT APPLICATION

(11) **EP 2 354 492 A2**
(43) Date of publication of application: **10.08.2011**
(21) Application number: 10195827.0
(22) Date of filing: 17.12.2010
(51) Int. Cl.: F02C 3/32, F02C 9/18, F02C 7/18

(54) **Ejector in an Overboard Bleed scheme for a gas turbine**

(30) Priority: 04.01.2010 US 651543
(71) Applicant: General Electric Company, Schenectady, NY 12345 (US)
(72) Inventor: Chandrabose, Shinoj Vakkayil, Schenectady, NY 12345 (US); Govindan, Parakash Narayan, Schenectady, NY 12345 (US); Pemmi, Bashkar, Schenectady, NY 12345 (US); Sharma, Anil Kumar, Schenectady, NY 12345 (US)
(74) Representative: Gray, Thomas

(57) **Abstract**

A cooling circuit in a gas turbine includes an over board bleed (OBB) circuit (36) bleeding air from a last stage of the compressor, an extracted air circuit (38) extracting air from an upstream stage of the compressor, and an ejector (42) receiving input from the OBB circuit and the extracted air circuit. Ejector outlet flow from the ejector is communicated to the turbine.

## Description

The invention relates to flow circuitry in a gas turbine to augment turbine performance and, more particularly, to using the overboard bleed flow to run an ejector and communicating ejector outlet flow to the turbine for stator and rotor cooling.

In gas turbines, it is typical for a portion of the total air flow from the compressor inlet to be diverted to various turbine components for various purposes, including cooling those components. The diverted air can consume a large proportion of the total air flow through the compressor. The management and control of these parasitic flows can dramatically increase the performance of the turbine. Typically, air under pressure is extracted from the compressor and bypasses the combustion system of the turbine for use as a cooling flow for various turbine components.

Blast furnace gas (BFG) is a low calorific value (BTU) byproduct of a steel mill, and it is desirable to use BFG as a fuel in the combustor of a gas turbine. Such use, however, involves several challenges. For example, high fuel mass flows are required to attain decent firing temperatures. Conversely, the air flows are reduced so that the air/fuel ratio is lesser, and a higher flame temperature can be attained. The gas turbine compressor, however, needs to run at a minimum volumetric flow (to avoid surge). To reduce the mass flow to the combustor, some amount of air is bled after the last stage of the compressor. This bleed flow is referred to as overboard bleed (OBB).

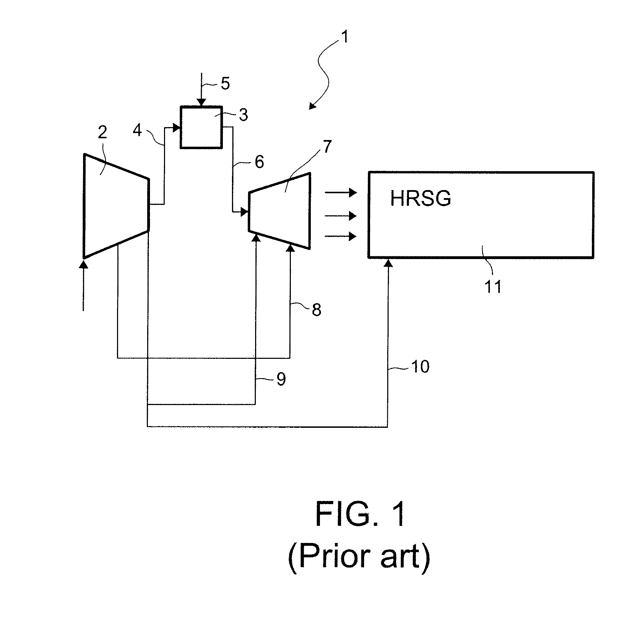

FIG. 1 is a schematic diagram of a gas turbine 1 using OBB flow for a BFG cooling circuit installation. The turbine includes a multi-stage compressor 2, where each stage compresses input air to higher pressures and temperatures. A combustor 3 receives pressurized air from the compressor via input line 4 and mixes the pressurized air with fuel via fuel input 5 to output hot gases of combustion via line 6. The hot gases of combustion are input to a turbine 7.

Pressurized air can be extracted from the compressor 2 via line 8 to bypass the combustor 3. This pressurized air can be input to the turbine 7 for cooling purposes, such as for cooling the third expander stator of the turbine 7. The first and second stage expanders of the turbine (stator, forward wheel space and the rotors) and the third stage of the rotor can be cooled using, for example, 17^{th} stage air from the compressor 2 via line 9. The rest of the final stage extraction is the OBB flow which is input to a heat recovery steam generator (HRSG) 11.

It would be desirable to reduce the flow rate through the compressor 2 by making optimal use of the OBB flow.

Additionally, low BTU fuel run gas turbine units need to have a lesser air flow, but because of surge requirements, the air flow through the compressor is much higher than required. This leads to loss of valuable power in the form of compressor work. It would also be desirable to reduce this loss of power.

In an exemplary embodiment, a gas turbine includes a compressor including a plurality of stages, a combustor, and a turbine. Each stage of the compressor compresses input air to higher pressures and temperatures. The combustor receives pressurized air from the compressor and mixes the pressurized air with fuel to output hot gasses of combustion. The turbine receives the hot gasses of combustion from the combustor. An over board bleed (OBB) circuit bleeds air from a last stage of the compressor, and an extracted air circuit extracts air from an upstream stage of the compressor. An ejector receives input from the OBB circuit and the extracted air circuit, and ejector outlet flow from the ejector is communicated to the turbine.

In another exemplary embodiment, a cooling circuit in a gas turbine includes an over board bleed (OBB) circuit bleeding air from a last stage of the compressor, an extracted air circuit extracting air from an upstream stage of the compressor, and an ejector receiving input from the OBB circuit and the extracted air circuit, where ejector output (outlet flow) from the ejector is communicated to the turbine for rotor and stator cooling.

In yet another exemplary embodiment, a method of operating a gas turbine includes the steps of compressing input air across a plurality of compressor stages to higher pressures and temperatures; mixing the pressurized air with fuel in a combustor and outputting hot gasses of combustion to a turbine; bleeding air via an over board bleed (OBB) circuit from a last stage of the compressor; extracting air via an extracted air circuit from an upstream compressor stage; communicating output from the OBB circuit and from the extracted air circuit to an ejector; and communicating ejector outlet flow to the turbine.
Embodiments of the invention will now be described, by way of example, with reference to the accompanying drawings, in which:

FIG. 1 is a schematic blow diagram of a conventional blast furnace gas cooling circuit installation using OBB flow;

FIG. 2 is a schematic block diagram of an OBB cooling circuit scheme to augment turbine power; and

FIG. 3 is a close-up view of an exemplary ejector.

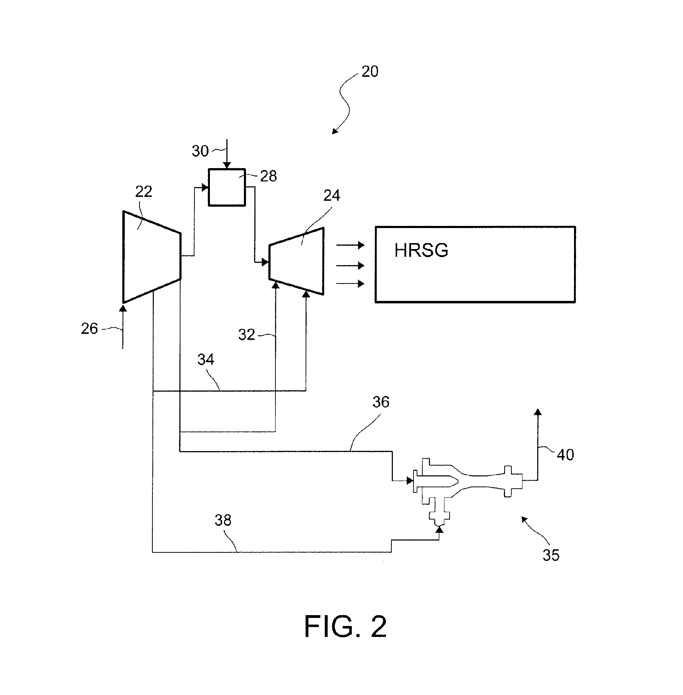

With reference to FIG. 2, a gas turbine 20 includes a compressor 22 and a turbine 24. The compressor 22 has an inlet 26 for receiving ambient air, which is then compressed through a number of different stages in the compressor 22, each compressing the air to higher pressures and temperatures. The compressed air is primarily for delivery to a combustor 28, where the pressurized air is combined with fuel input via a fuel line 30 and combusted to provide hot gases of combustion to the various stages of the turbine 24.

Bleed air can be removed from stages of the compressor 22 for use as cooling/purge air flow in the turbine. A portion of the compressor air flow is diverted from flow through the combustor 28 for these other purposes. In the exemplary scheme shown in FIG. 2, first and second stage expanders (stator, forward wheel space and the rotors) and the third stage rotor are cooled using air extracted from a last stage (e.g., the 17^{th} stage in an exemplary application) of the compressor 22 via line 32. Additionally, compressed air extracted from an upstream stage of the compressor 22 via line 34 can be input from the turbine 24 to cool the third expander stator.

With continued reference to FIG. 2, OBB flow is communicated to an ejector 35 via line 36 and is combined with extracted air from an upstream stage of the compressor 22 (e.g., the 5^{th} stage) via line 38. With the OBB flow, the ejector 35 serves to increase the pressure of the extracted air from the compressor upstream stage and can be used for cooling the stator and the forward wheel space of the second stage expander and the stator of the third expander and the turbine 24. FIG. 2 shows ejector outlet flow to the turbine 24 via line 40.

The OBB flow is thus used to pressurize a compressor upstream stage extraction in the ejector to reduce the higher stage extractions and hence reduce the compressor air flow and the power consumption. This also has an advantageous result of removing the limit of 730°F on the compressor discharge temperature, which was established because there is a maximum cooling air temperature that can be used for the forward wheel space cooling.

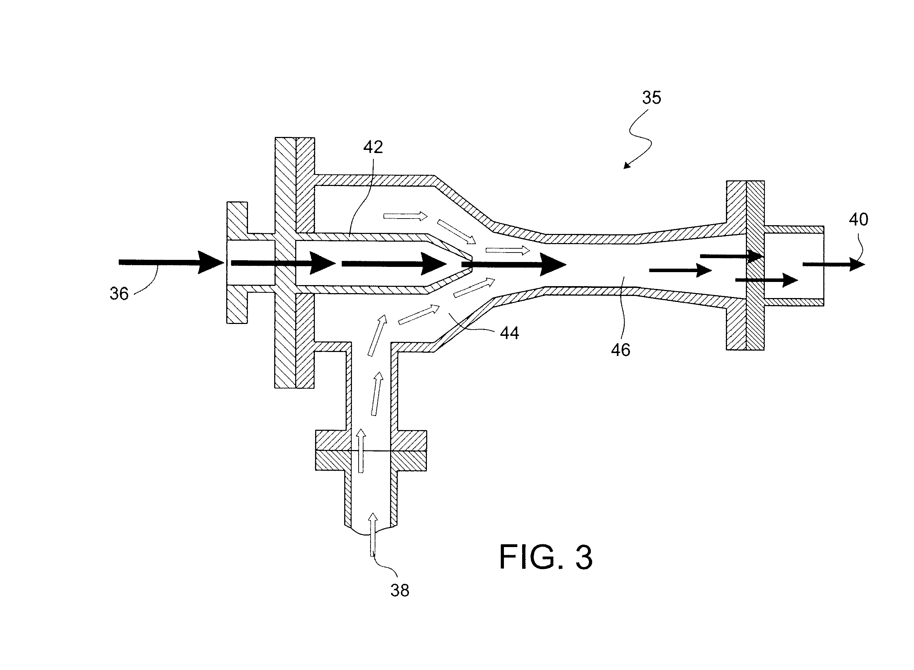

An exemplary ejector 35 is shown in FIG. 3. High pressure air from the OBB flow is input via line 36, and lower pressure air from the compressor upstream stage is input via line 38. The pressure energy from the OBB flow is converted to high velocity energy via an ejector nozzle 42, and the air extracted from the compressor upstream stage is entrained by the high velocity air in the suction chamber 44. The velocity energy of the mixture is converted to pressure energy in a diffuser 46, and the ejector outlet flow is delivered via line 40 to the turbine 24.

The described system reduces the flow rate through the compressor by making optimal use of the OBB. An ejector used in conjunction with the OBB and an upstream compressor stage extraction reduces the last stage extraction used for cooling the rotors, stators and the forward wheel spacing of the gas turbine expanders. Thermodynamic models have been built, and substantial efficiency increases can be achieved over the presently available combined cycle systems.

## Claims

1. A gas turbine comprising:
a compressor (22) including a plurality of stages, each stage compressing input air to higher pressures and temperatures;
a combustor (28) receiving pressurized air from the compressor, the combustor mixing the pressurized air with fuel to output hot gasses of combustion;
a turbine (24) receiving the hot gasses of combustion from the combustor;
an over board bleed (OBB) circuit (36) bleeding air from a last stage of the compressor;
an extracted air circuit (38) extracting air from an upstream stage of the compressor; and
an ejector (42) receiving input from the OBB circuit and the extracted air circuit, wherein ejector outlet flow from the ejector is communicated to the turbine.

2. A gas turbine according to claim 1, wherein the turbine (24) includes a plurality of stages, and wherein the ejector outlet flow is communicated to an intermediate turbine stage.

3. A gas turbine according to claim 2, wherein the ejector outlet flow is communicated to a forward wheel space of a second turbine stage.

4. A gas turbine according to claim 3, wherein the ejector outlet flow is communicated to an upstream forward wheel space of a third turbine stage.

5. A gas turbine according to any preceding claim, wherein the extracted air is extracted from a fifth compressor stage.

6. A cooling circuit in a gas turbine including a compressor (22), a combustor (28) receiving output from the compressor, and a turbine (24) receiving hot gasses of combustion from the combustor, the cooling circuit comprising:
an over board bleed (OBB) circuit (36) bleeding air from a last stage of the compressor;
an extracted air circuit (38) extracting air from an upstream stage of the compressor; and
an ejector (42) receiving input from the OBB circuit and the extracted air circuit, wherein ejector outlet flow from the ejector is communicated to the turbine.

7. A cooling circuit according to claim 6, wherein the extracted air is extracted from a fifth compressor stage.

8. A method of operating a gas turbine, comprising:
compressing input air across a plurality of compressor stages to higher pressures and temperatures;
mixing the pressurized air with fuel in a combustor (28) and outputting hot gasses of combustion to a turbine (24);
bleeding air via an over board bleed (OBB) circuit (36) from a last stage of the compressor;
extracting air via an extracted air circuit (38) from an upstream compressor stage;
communicating output from the OBB circuit and from the extracted air circuit to an ejector (42); and
communicating ejector outlet flow to the turbine.

9. A method according to claim 8, wherein the turbine includes a plurality of stages, and wherein the step of communicating ejector outlet flow is practiced by communicating ejector outlet flow to an intermediate turbine stage.

10. A method according to claim 8 or claim 9, wherein the extracting step is practiced by extracting air from a fifth compressor stage.
